# EUROPEAN PATENT APPLICATION

(11) **EP 2 202 471 A1**
(43) Date of publication of application: **30.06.2010**
(21) Application number: 09016001.1
(22) Date of filing: 24.12.2009
(51) Int. Cl.: F25B 27/00, F24D 11/02

(54) **Heat pump**

(30) Priority: 24.12.2008 NL 1036365
(71) Applicant: Installect B.V., 7223 KA Baak (NL)
(72) Inventor: Wubbeling, Johannes Gerhardus, 7491 CC Delden (Ov.) (NL); Kamphuis, Gerrit Willem, 7223 KA Baak (NL)
(74) Representative: Valkonet, Rutger

(57) **Abstract**

A heat pump (1) comprising a heat pump circuit including a compressor (2), a condenser (3), an expansion element (4) and an evaporator (5), which compressor is driven by a motor (12), wherein the heat pump comprises a second heat pump circuit, which extends parallel to the first circuit, wherein the evaporator forms part of both heat pump circuits and wherein the second circuit comprises a compressor (6) driven by said motor (12), a condenser (7) and an expansion element (8), wherein the motor (12) that drives the compressors (2,6) is controlled by a control system (13) for stepless adjustment of the energy delivery to a heating system connected to the heat pump.

## Description

The invention relates to a heat pump comprising a heat pump circuit including a compressor, a condenser, an expansion element and an evaporator, which compressor is driven by a motor.

Heat pumps are being sold as a source for space heating, space cooling and hot tap water. The efficiency of such installations used for heating purposes is relatively high. Ground water and surface water, outside air and ventilation air, for example, are available as heat sources. A heat pump including a compressor, a condenser, an expansion element and an evaporator is generally known.

German published patent application DE 34 14 002 describes an installation for supplying buildings with hot water, comprising a heat pump provided with a compressor, which can be driven by a diesel or gas engine. Said installation further comprises a pair of storage vessels and a solar collector. In the first storage vessel, water having a relatively low temperature is collected. Said water is obtained by heating water, using energy that is extracted inter alia from the air and from the heat of the flue gases of the gas engine. In the second storage vessel, the water is heated by the condenser of the heat pump. The heat pump is disposed between the aforesaid storage vessels. The installation described therein further comprises a heat exchanger for the waste gases of the engine. Said installation is a complex installation, and it has been found that setting the amount of the energy to be delivered to a heating system by the heat pump according to the user's requirements is not easy. It has furthermore been found that such a plant is too voluminous to make production thereof as a compact package unit possible.

German published patent application DE 26 33 389 describes an energy generator for feeding a heating system. The installation described therein comprises a heat pump whose compressor is driven by a combustion engine, whilst means are provided for utilising residual heat from the flue gases. The engine used in this installation is not a controllable engine. Moreover, the efficiency of the installation is limited, as no use is made of energy recovery from the cooling water.

The known heat pumps have the drawback that a user cannot readily set the temperature of the cooling liquid (for example water) of a heating system connected to the heat pump, for example a central heating system, according to his or her requirements. In the known installations, additional measures such as the provision of (frequently voluminous) buffer tanks are required for this purpose. The efficiency of the central heating system is optimal in that case.

The object of the invention is to provide a heat pump which can be connected to a heating system in a simple manner, which is compact, which has a high efficiency and in which a user can readily set the heat that is to be delivered to the heating system.

According to the invention, a heat pump of the kind described in the above preamble is to that end **characterised in that** the heat pump comprises a second heat pump circuit, which extends parallel to the first circuit, wherein the evaporator forms part of both heat pump circuits and wherein the second circuit comprises a compressor driven by said motor, a condenser and an expansion element, wherein the motor that drives the compressors is controlled by a control system for infinitely adjusting the energy delivery to a heating system connected to the heat pump.

A heat pump according to the invention has a high efficiency and has the advantage that a user can set the temperature of a heating system connected to the heat pump in a simple manner. The various parts can be readily designed to form a compact system.

The capacity of the compressors, the condensers and the evaporator (which forms part of both circuits and which preferably comprises two separate refrigerant circuits and one water circuit) has been determined on the basis of the delivered maximum output of the heat pump. In general, however, said maximum output is required during only 20% of the operating time of the heat pump.

The proportion useful heat - consumed energy of the heat pump associated with said maximum output, or the efficiency (C.O.P. - Coefficient of Performance, or P.E.R. - Primary Energy Rate) is not optimal when the heat pump is operated in this manner. In the heat pump according to the invention, the compressors in the two parallel circuits are both driven by one motor, and a user can control the energy requirement in an infinitely variable manner. The motor that drives the compressors may be an electric motor. In a practical embodiment, the motor is a gas motor. The efficiency of the installation depends on the evaporation temperature and the condensation temperature of the gas or liquid in the heat pump circuit. If a user requires a lower output, the control system of the gas motor for the compressors, the condensers and the evaporator and that of the electronic expansion means arrange that an optimum evaporation temperature and condensation temperature are set at said lower output. In practice this means a lower temperature in the condenser and a higher temperature in the evaporator. The C.O.P. and the P.E.R. are increased in that case. When two circuits and an adequate electric control system are used, a high efficiency level is realised by correctly setting the required temperature.

In the heat pump according to the invention, the capacity can be infinitely adjusted within a large range by a user. This is preferably realised by adjusting the output of the motor of the two compressors, for example by means of a belt-driven gas motor.

Thus the main advantage of using a heat pump according to the invention provided with the two parallel circuits becomes apparent. By varying the motor speed and selecting the right belt transmission, the capacity can be infinitely adjusted by a user within a large range of 25% - 100% of the maximum value. The capacity of the heat pump is set so by the control system that the heat pump will operate at the optimum number of revolutions of the motor.

A preferred embodiment of the heat pump according to the invention is **characterised in that** the control system sets the capacity of the compressors, the condensers and the evaporator on the basis of the output to be delivered to a heating system connected to the heat pump, which output is to be determined by a user.

The evaporator preferably comprises two separate refrigerant circuits and one water circuit. The refrigerant is the medium that passes through the thermodynamic cycle in the heat pump. Temperature differences in the water circuit are thus prevented. The condensers are preferably of the water-cooled type. An improved infinite adjustment of the output can be realised in that case, for example by adjusting the number of revolutions of the motor. In a practical embodiment, the gas motor operates continuously at a temperature of the water cooling circuit of about eighty degrees, independently of the load. At said temperature, monovalent generation of tap water is possible.

The gas motor is preferably connected to a tap water facility. In this way the efficiency of a heating system connected to the heat pump can be increased.

The invention will now be explained in more detail with reference to a drawing, which schematically shows an embodiment of the heat pump according to the invention.

The drawing shows a diagram of a compact installation comprising a heat pump and a heating system. The installation furthermore comprises a gas motor with an associated flue gas discharge system.

The heat pump 1 comprises a first heat pump circuit including a first compressor 2, a first condenser 3, a first expansion element configured as an expansion valve 4 and an evaporator 5.

The heat pump further comprises a second heat pump circuit, which extends parallel to the first circuit.

The second circuit, which extends parallel to the first circuit, comprises a second compressor 6 driven by a gas motor 12, a second condenser 7 and the second expansion valve 8. The evaporator 5 forms part of both heat pump circuits. The arrows (9, 10) at the bottom side of the evaporator 5 indicate the inlet and outlet of a cooling liquid system. The evaporator 5 comprises two separate refrigerant circuits and one water circuit.

The heat pump 1 is controlled by a control system for infinitely adjusting the energy delivery to a heating system 11. The control system preferably controls the heat pump at the optimum operating point of the gas motor so as to realise a high efficiency of the heat pump and the system connected thereto.

The compressors 2 and 6 are connected to the gas motor 12 via electromagnetic couplings 2a and 6a, respectively. The control system of the gas motor comprises three control elements and three levels, viz. the control of the motor as such, the adjusting and controlling of process flows in the heating system (CH), the tap water and, if necessary, the delivery of cold water. Finally, there is a connection to the process or the building for the delivery of energy (including an interface for the communication with an external management system, for example via a modem or an internal protocol).

The first control element comprises an electronic management system 13 for controlling the gas motor. Said motor management system controls characteristic properties of the motor during operation, such as the number of revolutions, the start and stop cycle, the adjustment of the gas mixture, etc, as well as the monitoring of temperature settings, mechanical failures, etc. The aforesaid motor management system also communicates with a heat pump management system and subsequently with the heating system connected thereto. This is indicated by an arrow 14 in the diagram.

Furthermore, a flue gas cooler 15 and a counterflow device 16 are incorporated in the circuit to the heating system. This makes it possible to supply tap water having a high temperature to the heating system. Pressureless motor cooling is effected by the element 17. The gas supply for the motor is indicated at 18. In this embodiment, the motor is furthermore connected to the generator 19 via the electromagnetic coupling 19a. The liquid system further includes a pump 20 and a three-way valve 21. The temperature of the water will remain constant at around eighty degrees Celsius in that case.

The second control element comprises an electronic management system for the heat pump and for the generator 19. Said management system controls the start and stop cycle for the heat pump, as well as characteristic quantities such as the pressure control in the evaporator, in the condensers and the temperature as well as the flow rate in the respective cooling circuits. Also the optimum positions for the electronic expansion and control valves are checked by said management system. Finally, the system communicates electronically with the heating system 11 (for example via the communication bus 14).

The third control element is used for the heating system 11 and arranges for the correct amount of energy to be delivered to the space to be heated, such as a building. The third control element is provided with elements which are known per se, such as a control element for controlling the output of energy, hot water, tap water, etc.

The above-described system of the gas motor-driven heat pump, the flue gas cooler, heat exchangers in the cooling water system and the control system is realised as one integral compact unit. With such an installation it is possible to deliver hot tap water and water to an outside temperature-controlled central heating system simultaneously.

During hot summers, such an installation can be used for cooling purposes. It is furthermore possible to have the installation deliver electricity in addition to heat. This makes it profitable to use the installation in greenhouse farming, among other fields, for utilising the carbon dioxide gases being released upon heating.

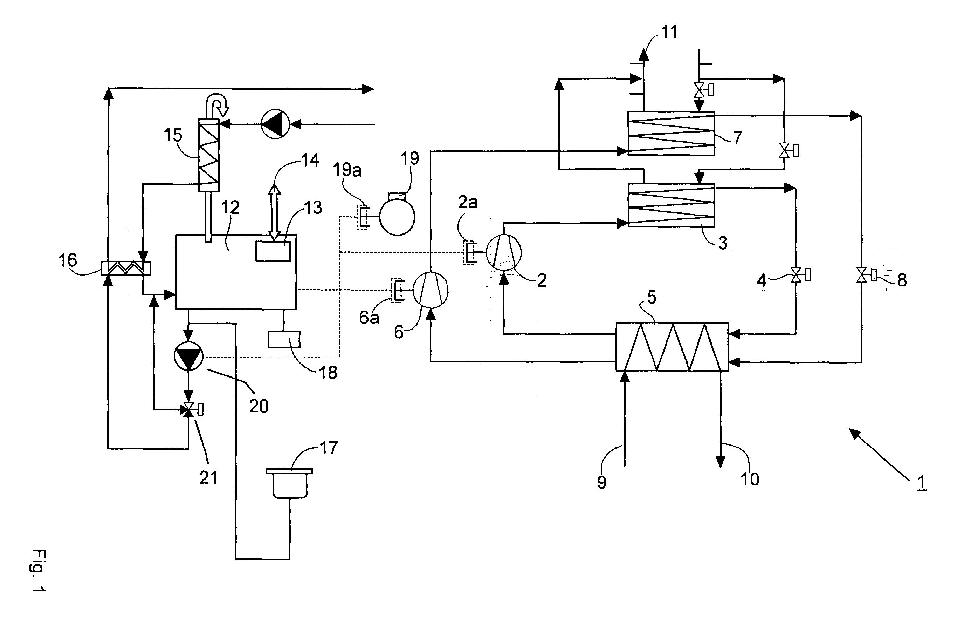

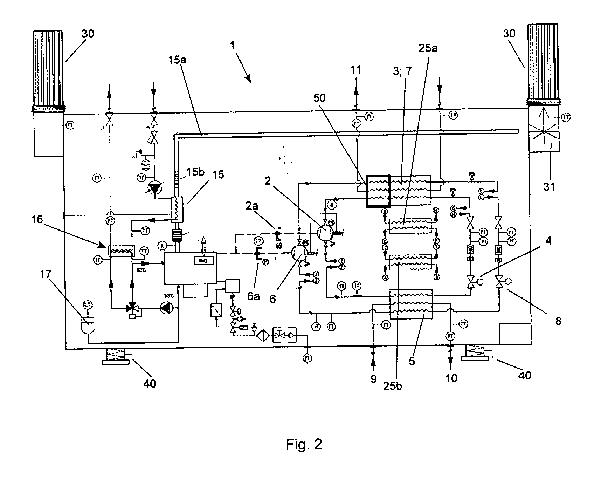

In figure 2 another embodiment is shown, in which like parts are indicated by the same numerals for the sake of clarity. In figure 2, the condensers 3 and 7 are integrated into a combined condenser 3;7. This results in a more compact installation, which, in addition to being cheaper and easier to maintain, also has an improved thermal management.

According to another aspect of the invention, the heat pump 1 comprises a compressed gas cooler 50 connected between the compressors 2;6 and the condensers 3;7. More specifically, the compressed gas cooler 50 is integrated with the condensers 3;7, as a result of which an improved efficiency of the condensers 3;7 can be realised, because residual heat can be recovered from the heat circuits and be delivered elsewhere by means of the compressed gas cooler.

Figure 2 also shows another embodiment of the invention in which the first and/or the second heat pump circuit comprise a suction gas exchanger 25a and 25b, respectively. The suction gas exchangers 25a and 25b are incorporated in each first and the second heat pump circuit, respectively, in such a manner as to place the pipe sections of the respective circuit in heat-exchanging contact with each other upstream and downstream of the condensers 3 and 7, respectively.

The suction gas exchanger 25a has a first inlet F and the first outlet E, which are connected between the evaporator 5 and the compressor 2 in the first heat pump circuit. The suction gas exchanger 25b likewise has a first inlet A and a first outlet B, which are connected between the evaporator 5 and the compressor 6 in the second heat pump circuit.

The suction gas exchangers 25a and 25b, respectively, furthermore have a second inlet G (C, respectively) and a second outlet H (D, respectively) , which are connected between the condenser 3 (7, respectively) and the evaporator 5 in the first (the second, respectively) heat pump circuit.

In figure 2, the flue gas cooler 15 is provided with a sound absorber 15b, which is mounted in a blow-off duct 15a extending towards a exhaust air duct. Mounted in said exhaust air duct is a fan 31, which, also in this case, is provided with a sound-absorber 20. In the figure, each exhaust air duct is provided with such a sound absorber 30.

In the embodiment of figure 2, the heat pump installation furthermore comprises at least one of vibration damper 40, so that the heat pump to be installed as an appliance is low-noise as well as low-vibration, as a result of which the appliance can be used at all kinds of locations.

## Claims

1. A heat pump comprising a heat pump circuit including a compressor, a condenser, an expansion element and an evaporator, which compressor is driven by a motor, **characterised in that** the heat pump comprises a second heat pump circuit, which extends parallel to the first circuit, wherein the evaporator forms part of both heat pump circuits and wherein the second circuit comprises a compressor driven by said motor, a condenser and an expansion element, wherein the motor that drives the compressors is controlled by a control system for stepless adjustment of the energy delivery to a heating system connected to the heat pump.

2. A heat pump according to claim 1, **characterised in that** the control system sets the capacity of the compressors, the condensers and the evaporator on the basis of the output to be delivered to a heating system connected to the heat pump, which output is to be determined by a user.

3. A heat pump according to claim 1 or 2, **characterised in that** the motor is a controllable gas motor.

4. A heat pump according to claim 1, 2 or 3, **characterised in that** the condensers are of the water-cooled type.

5. A heat pump according to any one of the preceding claims, **characterised in that** the motor is connected to tap water means.

6. A heat pump according to any one of the preceding claims, **characterised in that** the control system controls the optimum operating point of the gas motor.

7. A heat pump according to any one of the preceding claims, **characterised in that** the evaporator comprises two separate refrigerant circuits and one water circuit.

8. A heat pump according to any one of the preceding claims, **characterised in that** the condensers of the two heat pump circuits are integrated.

9. A heat pump according to any one of the preceding claims, **characterised in that** the heat pump comprises a compressed gas cooler integrated with the condensers.

10. A heat pump according to any one of the preceding claims, **characterised in that** a suction gas exchanger is incorporated in the first and/or the second heat pump circuit, which suction gas exchanger place(s) the heat pump circuits upstream and downstream of the condenser in heat-exchanging contact with each other.

11. A heat pump according to claim 10, **characterised in that** each suction gas exchanger has a first inlet and a first outlet, which are connected between the evaporator and the compressor in the heat pump circuit.

12. A heat pump according to claim 10 or 11, **characterised in that** each suction gas exchanger has a second inlet and a second outlet, which are connected between the condenser and the evaporator in the heat pump circuit.

13. A heat pump according to any one of the preceding claims, **characterised in that** the heat pump is provided with at least one sound-absorber.

14. A heat pump according to any one of the preceding claims, **characterised in that** the heat pump is provided with at least one vibration damper.
